# EUROPEAN PATENT APPLICATION

(11) **EP 4 830 909 A1**
(43) Date of publication of application: **28.10.2026**
(21) Application number: 25898950.8
(22) Date of filing: 26.11.2025
(51) Int. Cl.: B30B 3/04, B30B 3/00, B30B 15/26, B30B 15/34, B21B 37/20, H01M 4/04

(54) **ELECTRODE SHEET TANDEM ROLLING APPARATUS AND TANDEM ROLLING METHOD**

(30) Priority: 27.11.2024 KR 20240172129
(71) Applicant: LG Energy Solution, Ltd., Seoul 07335 (KR)
(72) Inventor: KIM, Yeonsu, Daejeon 34122 (KR); KIM, Hwan Han, Daejeon 34122 (KR); YOON, Tae Gyun, Daejeon 34122 (KR)
(74) Representative: Plasseraud IP
(86) International application number: PCT/KR2025/019815
(87) International publication number: WO 2026/116998

(57) **Abstract**

According to an embodiment of the present disclosure, provided is a tandem rolling apparatus for rolling an electrode sheet, comprising a coating portion in which an electrode active material slurry is coated on at least one surface of a current collector and a non-coating portion in which an electrode active material slurry is not coated, the apparatus comprising:
a rolling unit comprising a first rolling roll disposed on the upper and lower sides of the electrode sheet to subject the electrode sheet to primary rolling, and a second rolling roll disposed on the upper and lower sides of the electrode sheet to subject the primary rolled electrode sheet to secondary rolling,
two or more transport rolls that transport the electrode sheet,
a load cell that monitors the tension of the electrode sheet passing through the second rolling roll,
a cooling unit that comprises a plurality of cooling rolls provided spaced apart from each other along the transport direction of the electrode sheet so as to cool the electrode sheet, and a nip roll in contact with a rear cooling roll located at the terminal of the transport direction among the cooling rolls, and
a control unit that adjusts an upper limit torque of the cooling rolls in consideration of the transport speed of the electrode sheet.

## Description

### TECHNICAL FIELD

### Cross-Reference to Related Application(s)

This application claims priority to and the benefit of Korean Patent Application No. 0-2024-0172129, filed on November 27, 2024, the entire contents of which are incorporated herein by reference.

The present disclosure relates to a tandem rolling apparatus and tandem rolling method for rolling an electrode sheet.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

The manufacturing process of such a lithium secondary battery is roughly classified into three steps: an electrode process, an assembly process, and a formation process. The electrode process may be again divided into an active material mixing process, an electrode coating process, a rolling process, a slitting process, a winding process, and the like.

Among them, the rolling process is a process of passing an electrode substrate between a pair of rolling rolls heated to high temperature and compressing it to a desired thickness, in order to reduce the thickness of the electrode substrate having finished the coating process to thereby increase capacity density, and to increase the adhesion between the electrode current collector and the electrode active material.

In this case, the rolling process is divided into single rolling, which performs rolling only once, and tandem rolling, which performs rolling twice. Recently, as the development of high-capacity batteries has been actively promoted, the tandem rolling process has become mainstream.

However, the tandem rolling has problems in that the drawing rate is higher than in single rolling, and thus, the difference in drawing rate between a coating portion coated with an active material layer and a non-coating portion not formed with an active material layer increases, thereby increasing a tension burden received by the non-coating portion and increasing the risk of disconnection.

In regards to this, the tandem rolling apparatus has cooling rolls between the second rolling rolls and the outfeed section, however, conventionally, the outfeed tension section is maintained as a single section, which makes it impossible to control the tension between the cooling rolls just after secondary rolling.

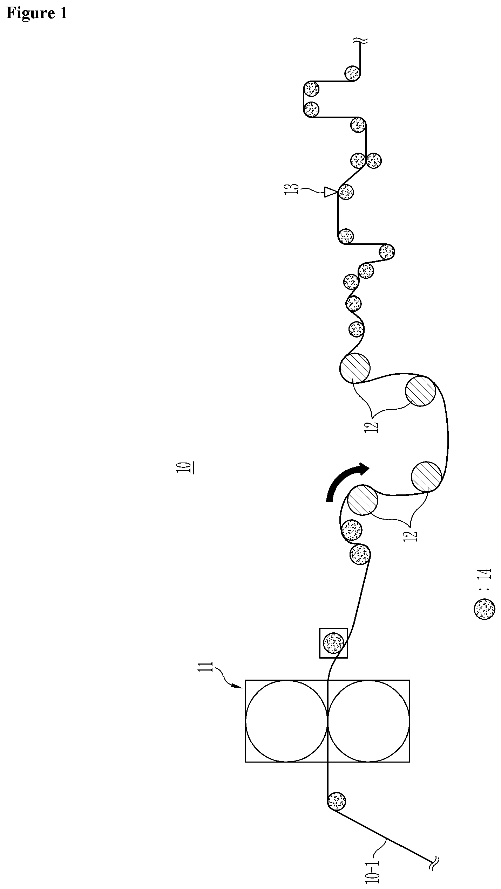

In order to explain this, Figure 1 schematically shows a part of a conventional tandem rolling apparatus 10, specifically, the subsequent apparatus including the second rolling rolls.

Referring to Figure 1, a conventional tandem rolling apparatus 10 includes a second rolling roll 11 that rolls an electrode sheet 10-1, and the electrode sheet 10-1 passing through the second rolling roll 11 is transported to a cooling roll 12 by the transport roll 14. At this time, tension acts on the electrode sheet 10-1 based on the torque value of the cooling roll 12 and the transport speed of the electrode sheet 10-1, however, since the nip roll 13 is located only at a terminal part of the tandem rolling apparatus 10, tension control between the second rolling roll 11 and the cooling roll 12 is impossible.

In addition, a conventional tandem rolling apparatus 10 operates while the upper torque limit of the cooling roll 12 is being fixed, there is a problem that the tension is high just after rolling, and variation exists in tension by the transport speed.

Therefore, there is a need to develop a rolling process technology that can adjust tension just after this secondary rolling and thus improve disconnection of the electrode sheet.

### DETAILED DESCRIPTION OF THE INVENTION

### Technical Problem

It is an object of the present disclosure to provide a tandem rolling apparatus and tandem rolling method for rolling an electrode sheet that can improve disconnection of the electrode sheet caused by tandem rolling.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a tandem rolling apparatus for rolling an electrode sheet, comprising a coating portion in which an electrode active material slurry is coated on at least one surface of a current collector and a non-coating portion in which an electrode active material slurry is not coated, the apparatus comprising:
a rolling unit comprising a first rolling roll disposed on the upper and lower sides of the electrode sheet to subject the electrode sheet to primary rolling, and a second rolling roll disposed on the upper and lower sides of the electrode sheet to subject the primary rolled electrode sheet to secondary rolling,
two or more transport rolls that transport the electrode sheet,
a load cell that monitors the tension of the electrode sheet passing through the second rolling roll,
a cooling unit that comprises a plurality of cooling rolls provided spaced apart from each other along the transport direction of the electrode sheet so as to cool the electrode sheet, and a nip roll in contact with a rear cooling roll located at the terminal of the transport direction among the cooling rolls, and
a control unit that adjusts an upper limit torque of the cooling rolls in consideration of the tension of the electrode sheet measured by the load cell.

In this case, the control unit adjusts the upper limit torque of the cooling roll, with the tension value of the electrode sheet, measured by the load cell just after passing through the second rolling roll, being adjusted to be 130 N to 170 N.

In this case, the upper limit torque of the cooling roll may be adjusted within a range of 0.8% to 3%.

A transport speed of the electrode sheet by the transport roll may be 5 m/min to 110 m/min.

Meanwhile, the tandem rolling apparatus may further comprise a first preheating roll and a second preheating roll at a front end of the first rolling roll and a front end of the second rolling roll, respectively.

In addition, the tandem rolling apparatus may further comprise: an unwinder that unwinds the electrode sheet wound into a roll shape so as to allow the electrode sheet to be transferred to the rolling unit, and a rewinder that rewinds the electrode sheet into a roll shape after the electrode sheet passes through the cooling unit.

Moreover, the tandem rolling apparatus may further comprise an induction heating unit that heats the current collector before the electrode sheet is transported to the rolling unit.

Meanwhile, the surface temperatures of the first rolling roll and the second rolling roll may be respectively 25°C to 90°C, and the surface temperature of the cooling roll may be 10°C to 30°C.

According to another aspect of the present disclosure, provided is a tandem rolling method for rolling an electrode sheet, comprising a coating portion in which an electrode active material slurry is coated on one surface or both surfaces of a current collector and a non-coating portion in which an electrode active material slurry is not coated, the method comprising the steps of:
primarily rolling the electrode sheet by a first rolling roll,
secondarily rolling the primary pressed electrode sheet by a second rolling roll,
cooling the electrode sheet by the cooling roll after the secondary rolling, and
adjusting the upper limit torque of the cooling roll in consideration of the tension of the electrode sheet after the secondary rolling, with the tension of the electrode sheet just after passing through the second rolling roll being adjusted to be 130 N to 170 N.

In this case, the upper limit torque of the cooling roll may be adjusted within a range of 0.8% to 3%.

Here, the transport speed of the electrode sheet may be 5 m/min to 110 m/min.

The tandem rolling method may separate the tension section by applying a nip roll to the rear cooling roll located at the terminal of the cooling roll with respect to the transport direction of the electrode sheet.

The surface temperatures of the first rolling roll and the second rolling roll may be respectively 25°C to 90°C, and the surface temperature of the cooling roll may be 10°C to 30°C which is lower than the surface temperatures of the first rolling roll and second rolling roll.

Meanwhile, the tandem rolling method may further comprise an induction heating step of heating the current collector before the primary rolling.

### BRIEF DESCRIPTION OF THE DRAWINGS

Figure 1 is a partial schematic diagram of a conventional tandem rolling apparatus.
Figure 2 is a schematic diagram of a tandem rolling apparatus according to one embodiment of the present disclosure.
Figure 3 is a partial flowchart of a tandem rolling method according to one embodiment of the present disclosure.
Figure 4 is a graph showing the tension of the electrode sheet measured with a load cell just after the secondary rolling at different electrode sheet transport speeds in Comparative Example according to Experimental Example 1.
Figure 5 is a graph showing the tension of the electrode sheet measured with a load cell just after the secondary rolling at different electrode sheet transport speeds in Example according to Experimental Example 1.
Figure 6 is a graph showing the occurrence frequency of disconnection versus electrode sheet tension according to Experimental Example 2.

### DETAILED DESCRIPTION OF THE EMBODIMENTS

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Further, throughout the specification, when a portion is referred to as "including" a certain component, it means that the portion can further include other components, without excluding the other components, unless otherwise stated.

Now, embodiments of the present disclosure will be described with reference to the accompanying drawings.

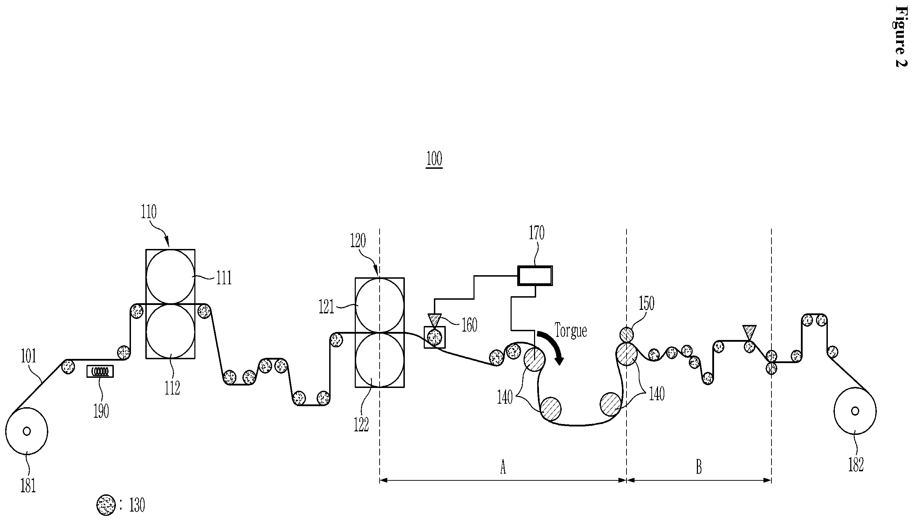

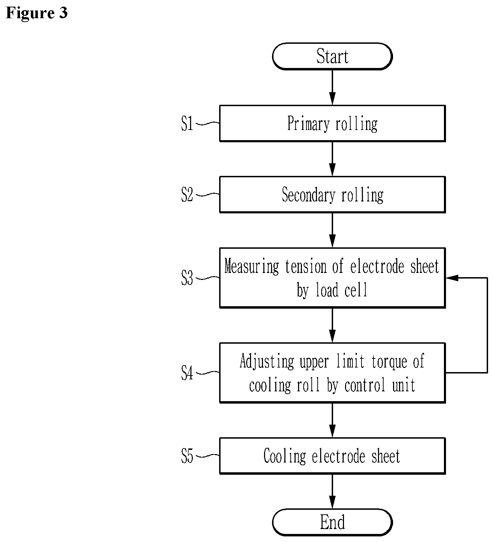

Figure 2 is a schematic diagram of a tandem rolling apparatus for rolling an electrode sheet according to an embodiment of the present disclosure, and Figure 3 is a sequential diagram of a part of a tandem rolling method for rolling an electrode sheet.

Next, a rolling apparatus and a rolling method that are applied to an electrode sheet according to the present disclosure will be specifically described with reference to Figures 1 and 2.

Referring to Figures 1 and 2 together, the tandem rolling apparatus 100 according to the present disclosure comprises two or more transport rolls 130 that transport the electrode sheet 101 as a whole, and a first rolling roll 110 disposed on the upper and lower sides of the electrode sheet 101 to subject the electrode sheet 101 to primary rolling, and a second rolling roll 120 disposed on the upper and lower sides of the electrode sheet 101 to subject the electrode sheet 101 passing through the first rolling roll 110 to secondary rolling.

The rolling method, which is performed two or more times in this manner, is called tandem rolling. As described above, the tandem rolling may increase the difference in drawing rate between a coating portion where an active material layer is formed and a non-coating portion where an active material layer is not formed, which results in a high frequency of disconnection.

Thus, as a result of a variety of extensive and intensive studies, the present inventors have developed a tandem rolling apparatus and a method thereof that can significantly reduce the occurrence frequency of disconnection of an electrode sheet 101, thus completing the present disclosure.

Here, although not shown in detail in the drawings, the electrode sheet 101 includes a coating portion in which an electrode active material slurry is coated on at least one surface of a current collector, and a non-coating portion in which the electrode active material slurry is not coated.

The current collector may be determined differently according to whether it is a positive electrode or a negative electrode, but generally has a thickness of 3 to 500 µm. Further, the current collector is not particularly limited as long as it has high conductivity without causing a chemical change in the battery, and for example, stainless steel, copper, aluminum, nickel, titanium, fired carbon, or copper, aluminum or stainless steel whose surface is treated with carbon, nickel, titanium, silver, or the like may be used. The current collector may have fine protrusions and depressions formed on a surface thereof to enhance adherence of an electrode active material, and may be used in various forms such as a film, a sheet, a foil, a net, a porous body, a foaming body, and a non-woven fabric structure.

In the electrode active material slurry, the type of active material is determined according to whether it is a positive electrode or a negative electrode. If the electrode sheet 101 is a positive electrode, the electrode active material slurry may include a positive electrode active material, a binder, a conductive material, other additives, and the like.

The positive electrode active material is, for example, a compound capable of reversible intercalation and deintercalation of lithium, and it may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like.

The conductive material is a component for further improving the conductivity of the active material, and is not particularly limited as long as it has conductivity without causing a chemical change in the battery, and for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the secondary battery and further enhance output characteristics.

Typically, the conductive material may be included in an amount of 1 to 20 wt.%, or 1 to 15 wt.%, or 1 to 10 wt.% based on the total weight of the solid components contained in the electrode active material slurry.

The binder is a component that assists in the bonding between the active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluorine rubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the solid components contained in the electrode active material slurry.

In addition, other additives may further include, for example, a filler or the like as a component for inhibiting the expansion. The filler is not particularly limited as long as it can inhibit the expansion of the electrode without causing a chemical change in the corresponding battery, and examples thereof may include olefinic polymers such as polyethylene and polypropylene; fibrous materials such as glass fibers and carbon fibers, and the like.

If the electrode sheet 101 is a negative electrode, the electrode active material slurry may include a binder, a conductive material, and other additives as described for the positive electrode, in addition to a negative electrode active material.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

Again, specifically reviewing the tandem rolling apparatus 100 and the tandem rolling method in detail, the electrode sheet 101 is first subjected to primary rolling by the first rolling rolls 110, namely, an upper first rolling roll 111 located at an upper part and a lower first rolling roll 112 located at a lower part based on the electrode sheet 101 (S1).

Subsequently, the electrode sheet 101 is subjected to secondary rolling by the second rolling rolls 120, namely, an upper second rolling roll 121 located on an upper part and a lower second rolling roll 12 located at a lower part based on the electrode sheet 101, so as to have a final target thickness or density (S2).

Here, the primary rolling and the secondary rolling are processes in which the electrode sheet 101 is rolled as a whole in the width direction, namely, the coating portion and non-coating portion of the electrode sheet 101 are rolled as a whole.

However, during this rolling, the non-coating portion is not rolled properly due to the thickness difference between the coating portion and the non-coating portion, namely, the thickness difference according to the thickness of the active material slurry applied.

Therefore, although not shown in the drawings, the tandem rolling apparatus and the tandem rolling method according to the present disclosure may further comprise, in each of the primary rolling and secondary rolling, a primary non-coating portion rolling process in which only the non-coating portion is rolled after the primary rolling, and a secondary non-coating portion rolling process in which only the non-coating portion is rolled after the secondary rolling, and may further include non-coating portion rolling rolls for performing this process.

Thereby, it is possible to reduce the difference in drawing rate between the coating portion and the non-coating portion.

Further, the rolling according to the present disclosure may also be performed by hot tandem rolling, thereby increasing the surface temperatures of the rolling rolls 110, 120 so that heat can be applied to the electrode sheet 101 together with the rolling.

For example, the surface temperatures of the first rolling roll 110 and the second rolling roll 120 that perform the primary rolling and the secondary rolling may be respectively 25°C to 90°C, particularly 60°C to 90°C, and more particularly 70°C to 90°C.

Here, the surface temperature may be measured by temperature sensors located near the upper and lower rolling rolls 111, 112, 121, 122 of the first rolling roll 110 and the second rolling roll 120. Specifically, the temperature sensors can measure temperature by irradiating the surfaces of the rolling rolls 111, 112, 121, 122 with lasers to sense the temperature.

When the temperatures of the first rolling roll 110 and the second rolling roll 120 are 25°C, this means that no separate heat is applied, however, in the case of performing the hot tandem rolling in which heat is applied to increase the surface temperatures of the first rolling roll 110 and the second rolling roll 120, if a model with a wide range of possible target thicknesses and a high rolling ratio is applied, it exhibits the effect of reducing the equipment load due to an increase in rolling load, which is preferable.

In this case, when hot tandem rolling is performed to increase the surface temperatures of the first rolling roll 110 and the second rolling roll 120, although not shown in the drawings, a preheating roll that applies heat to the electrode sheet 101 just before performing each of the primary and secondary rolling processes may be further included, and a process of preheating using the preheating roll may be further performed.

Here, the preheating may be performed so that the surface temperature of the preheating roll is 30°C to 50°C which is lower than the surface temperatures of the first rolling roll 110 and the second rolling roll 120.

Meanwhile, the tandem rolling apparatus 100 according to the present disclosure comprises a cooling unit that comprises a plurality of cooling rolls 140 provided spaced apart from each other along the transport direction of the electrode sheet 101 so as to cool the electrode sheet 101, and a nip roll 150 in contact with a rear cooling roll located at the terminal of the transport direction among the cooling rolls 140.

That is, according to the present disclosure, a nip roll 150 is applied and provided to the rear cooling roll, thereby dividing the tension section into two after the secondary rolling.

When the tension section is separated in this manner, it is easy to control the tension applied to the second rolling roll 120 and the cooling roll 140. Therefore, the present disclosure includes a nip roll 150 in contact with the rear cooling roll, so that the tension applied to the electrode sheet 101 just after passing through the second rolling roll 120 may be easily adjusted through the control unit 170.

Specifically, the tension of the electrode sheet 101 just after passing through the second rolling roll 120 may be measured and monitored by the load cell 160 (S3).

At this time, the tension of the electrode sheet 101 measured by the load cell 160 is a value obtained by measuring the force applied to the electrode sheet 101 by the transport roll just after the secondary rolling, in which the load cell 160 is located.

The control unit 170 adjusts the upper limit torque of the cooling roll 140 based on the tension of the electrode sheet 101 measured by the load cell 160 (S4).

Specifically, the control unit 170 may adjust the upper limit torque of the cooling roll 140, wherein the tension value of the electrode sheet 101 measured by the load cell 160 just after passing through the second rolling roll 120 may be adjusted to 130N to 170N, particularly 130N to 160N, and more particularly 130N to 150N.

It is difficult to maintain the tension to fall outside the above range and be smaller than the above range, and if the tension is larger than the above range, the occurrence frequency of disconnection increases, which is not preferable.

Therefore, the control unit 170 continuously receives the tension of the electrode sheet 101 from the load cell 160 and performs the role of continuously changing and adjusting the upper limit torque of the cooling roll 140 so that the tension is within the above range, and therefore, S3 and S4 are continuously repeated during the rolling process of the electrode sheet 101.

At this time, the control unit 170 adjusts the upper limit torque of the cooling roll 140 within a range of 0.8% to 3%, particularly 0.9% to 2.9%, so that the tension applied to the electrode sheet 101 just after the secondary rolling may be adjusted within the above range.

The tension of the electrode sheet 101 is determined by various factors, such as the upper limit torque of the cooling roll 140, the transport speed of the electrode sheet 101, and the traveling speed of the second rolling roll 120.

For example, if the transport speed of the electrode sheet 101 is high, the upper limit torque of the cooling roll 140 may be increased accordingly. If the transport speed of the electrode sheet 101 is low, the upper limit torque of the cooling roll 140 may be decreased accordingly, thereby reducing the tension applied to the electrode sheet 101.

The transport speed of the electrode sheet 101 may be, for example, 5 m/min to 110 m/min, and particularly 10 m/min to 100 m/min.

Thus, according to the present disclosure, when the tension value of the electrode sheet 101 just after passing through the second rolling roll 120 is adjusted to be 130 N to 170 N, the electrode sheet passes through the cooling roll 140, completing the cooling process (S5).

For this cooling, the surface temperature of the cooling roll 140 may be 5°C to 25°C, or particularly 5°C to 20°C which is lower than the surface temperatures of the first rolling roll and the second rolling roll,
The cooling roll 140 may be adjusted by passing cooling water or cooling air through a flow path inside the cooling roll 140.

If this cooling is not performed, it may cause electrode damage due to heating and may also affect the electrode material, which is not preferable.

Meanwhile, the tandem rolling apparatus 100 according to the present disclosure further includes an induction heating unit 190 that heats the current collector before the electrode sheet 101 is transported to the rolling unit, and thereby may further perform an induction heating process.

In this case, the induction heating unit 190 refers to a process that heats only the current collector portion. The induction heating temperature may be, particularly 200°C to 300°C, and more particularly 200°C to 260°C.

The induction heating temperature may be a temperature set in the induction heating unit 190.

If the induction heating temperature falls outside the above range and is too low, drawing of the non-coating portion may not be properly performed, which causes a problem that the likelihood of disconnection occurrence is high or wrinkles occur. If the induction heating temperature is too high, the tensile strength of the non-coating portion deteriorates and the likelihood of wrinkle occurrence increases, and thus the required electrode quality cannot be achieved, which is not preferable.

Meanwhile, the tandem rolling apparatus 100 of the present disclosure may further comprise an unwinder 181 that unwinds the electrode sheet 101 wound into a roll shape so as to allow the electrode sheet to be transferred to the rolling unit during rolling, and a rewinder 182 that rewinds the electrode sheet 101 into a roll shape after the electrode sheet passes through the cooling unit.

Hereinafter, embodiments are disclosed to facilitate understanding of the present disclosure. The differences in disconnection occurrence frequency when the conditions of the present disclosure are satisfied and when they are not satisfied are described with reference to experimental examples. However, the following examples are for illustrative purposes only and are not intended to limit the scope of the present disclosure.

### <Comparative Example>

While performing rolling using a tandem rolling apparatus as shown in Figure 1, the tension of the electrode sheet was measured by the load cell just after the secondary rolling.

### <Example>

Rolling was performed using a tandem rolling apparatus according to the present disclosure as shown in Figure 2, and while variably modifying the cooling roll torque value, the tension of the electrode sheet was measured by the load cell just after the secondary rolling. The torque value of the cooling roll is changed by applying the torque table in a direction to constantly maintain the tension of the electrode sheet measured by the load cell just after rolling as a target tension.

### <Experimental Example 1>

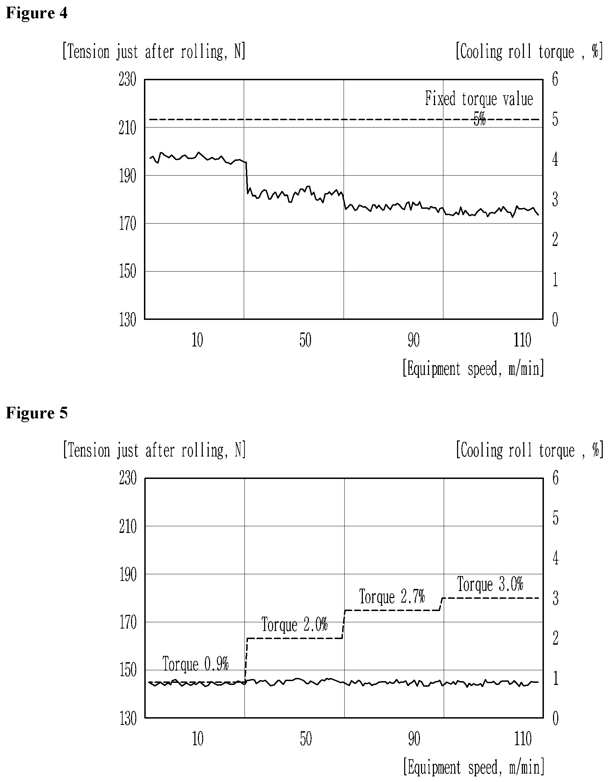

Graphs showing the changes in electrode sheet tension measured in Comparative Example and Example are shown in Figures 4 and 5.

Referring to Figures 4 and 5, when a conventional fixed torque value is used and a nip roll is not applied to the cooling roll, it may be confirmed that the tension of the electrode sheet just after secondary rolling has a value in the range of about 190 N to 210 N, regardless of the transport speed of the electrode sheet.

On the other hand, when the upper limit torque value of the cooling roll was changed in real time taking into consideration the transport speed of the electrode sheet according to the present disclosure, it may be confirmed that the tension of the electrode sheet just after secondary rolling is maintained at about 145 N.

### <Experimental Example 2>

Similarly to Example, the tandem rolling apparatus according to the present disclosure was used to adjust an upper limit torque of the cooling roll, wherein the tension just after secondary rolling was adjusted to be about 175N, about 145N, and about 130N to thereby perform electrode sheet rolling.

Also, similarly to Comparative Example, the electrode sheet rolling was performed using a conventional tandem rolling apparatus so that the tension just after the secondary rolling was about 190N.

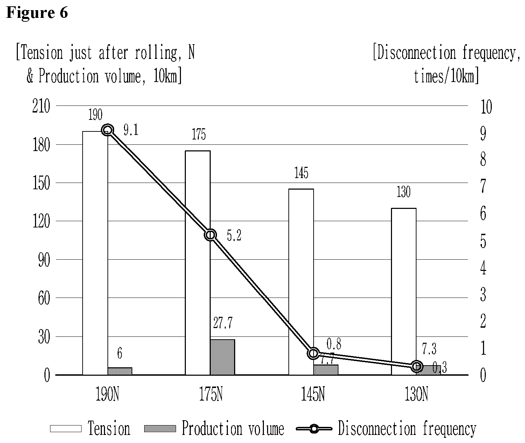

The occurrence frequency of disconnection of the electrode sheet was also investigated, and the results are shown in Figure 6 below.

When continuously produced for about 24 hours under respective conditions, the occurrence frequency of disconnection was acquired by dividing the number of times an item corresponding to a disconnection occurred in the equipment alarm history by the actual electrode production volume ([times] / production volume [10 km]).

Referring to Figure 6, it may be confirmed that the occurrent frequency of disconnection increases sharply as the electrode sheet tension increases just after secondary rolling. In particular, it may be confirmed that when the tension is about 190 N or 175 N, it appears a considerably high disconnection frequency, whereas when the tension is 145 N and 130 N, the occurrence frequency of disconnection significantly decreases.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10, 100: tandem rolling apparatus
110: first rolling roll
11, 120: second rolling roll
130: transport roll
140: cooling roll
150: nip roll
160: electrode sheet tension measuring load cell
170: control unit
181: unwinder
182: rewinder
190: induction heating unit

### [Industrial Applicability]

According to the present disclosure, when process conditions are adjusted to satisfy specific conditions in the rolling process of an electrode sheet, it exhibits the effect of dramatically improving disconnection during rolling without deteriorating the electrode quality.

## Claims

1. A tandem rolling apparatus for rolling an electrode sheet, comprising a coating portion in which an electrode active material slurry is coated on at least one surface of a current collector and a non-coating portion in which an electrode active material slurry is not coated, the apparatus comprising:
a rolling unit comprising a first rolling roll disposed on the upper and lower sides of the electrode sheet to subject the electrode sheet to primary rolling, and a second rolling roll disposed on the upper and lower sides of the electrode sheet to subject the primary rolled electrode sheet to secondary rolling,
two or more transport rolls that transport the electrode sheet,
a load cell that monitors the tension of the electrode sheet passing through the second rolling roll,
a cooling unit that comprises a plurality of cooling rolls provided spaced apart from each other along the transport direction of the electrode sheet so as to cool the electrode sheet, and a nip roll in contact with a rear cooling roll located at the terminal of the transport direction among the cooling rolls, and
a control unit that adjusts an upper limit torque of the cooling rolls in consideration of the tension of the electrode sheet measured by the load cell.

2. The tandem rolling apparatus according to claim 1,
wherein the control unit adjusts the upper limit torque of the cooling roll, with the tension value of the electrode sheet, measured by the load cell just after passing through the second rolling roll, being adjusted to be 130 N to 170 N.

3. The tandem rolling apparatus according to claim 1,
wherein a transport speed of the electrode sheet by the transport roll is 5 m/min to 110 m/min.

4. The tandem rolling apparatus according to claim 3,
wherein the upper limit torque of the cooling roll according to the transport speed of the electrode sheet is adjusted within a range of 0.8% to 3%.

5. The tandem rolling apparatus according to claim 1,
further comprising a first preheating roll and a second preheating roll at a front end of the first rolling roll and afront end of the second rolling roll, respectively.

6. The tandem rolling apparatus according to claim 1,
wherein the tandem rolling apparatus further comprises:
an unwinder that unwinds the electrode sheet wound into a roll shape so as to allow the electrode sheet to be transferred to the rolling unit, and
a rewinder that rewinds the electrode sheet into a roll shape after the electrode sheet passes through the cooling unit.

7. The tandem rolling apparatus according to claim 1,
wherein the tandem rolling apparatus further comprises an induction heating unit that heats the current collector before the electrode sheet is transported to the rolling unit.

8. The tandem rolling apparatus according to claim 1,
wherein surface temperatures of the first rolling roll and the second rolling roll are respectively 25°C to 90°C.

9. The tandem rolling apparatus according to claim 1,
wherein the surface temperature of the cooling roll is 10°C to 30°C.

10. A tandem rolling method for rolling an electrode sheet, comprising a coating portion in which an electrode active material slurry is coated on one surface or both surfaces of a current collector and a non-coating portion in which an electrode active material slurry is not coated, the method comprising the steps of:
primarily rolling the electrode sheet by a first rolling roll,
secondarily rolling the primary pressed electrode sheet by a second rolling roll,
cooling the electrode sheet by the cooling roll after the secondary rolling, and
adjusting the upper limit torque of the cooling roll in consideration of the tension of the electrode sheet after the secondary rolling, with the tension of the electrode sheet just after passing through the second rolling roll being adjusted to be 130 N to 170 N.

11. The tandem rolling method according to claim 10,
wherein the transport speed of the electrode sheet is 5 m/min to 110 m/min.

12. The tandem rolling method according to claim 10,
wherein the upper limit torque of the cooling roll according to the transport speed of the electrode sheet is adjusted within a range of 0.8% to 3%.

13. The tandem rolling method according to claim 10,
wherein the tandem rolling method separates the tension section by applying a nip roll to the rear cooling roll located at the terminal with respect to the transport direction of the electrode sheet.

14. The tandem rolling method according to claim 10,
wherein the surface temperatures of the first rolling roll and the second rolling roll are respectively 25°C to 90°C, and the surface temperature of the cooling roll is 10°C to 30°C which is lower than the surface temperatures of the first rolling roll and second rolling roll.

15. The tandem rolling method according to claim 10,
further comprising an induction heating process of heating the current collector before the primary rolling.
